# FASCICULE DE BREVET EUROPEEN

(11) **EP 3 172 475 B1**
(45) Date de publication et mention de la délivrance du brevet: **18.09.2019**
(21) Numéro de dépôt: 14759242.2
(22) Date de dépôt: 23.07.2014
(51) Int. Cl.: F16L 51/02, F16L 27/111

(54) **DISPOSITIF D'ÉTANCHÉITÉ EN FORME DE SOUFFLET MÉTALLIQUE RENFORCÉ**
ABDICHTUNGSVORRICHTUNG IN FORM VERSTÄRKTER METALLBÄLGE
SEALING DEVICE IN THE FORM OF A REINFORCED METAL BELLOWS

(43) Date de publication de la demande: 31.05.2017
(73) Titulaire: Weir Power&Industrial France, 13730 Saint Victoret (FR)
(72) Inventeur: SI AHMED, Mohand, F-13220 Chateauneuf les Martigues (FR)
(74) Mandataire: Roman, Alexis
(86) Numéro de dépôt international: PCT/FR2014/051913
(87) Numéro de publication internationale: WO 2016/012660

(56) Documents cités:
- EP-A1- 0 083 889
- EP-A1- 1 156 257
- GB-A- 2 062 132

## Description

### Domaine technique de l'invention.

La présente invention concerne les dispositifs d'étanchéité qui sont utilisés dans les équipements sous pression, pour contenir et/ou véhiculer des fluides sous pression.

Elle concerne plus particulièrement des dispositifs d'étanchéité en forme de soufflet métallique renforcé qui font office de joint pour assurer une étanchéité parfaite entre deux pièces mobiles, ou susceptibles d'être mobiles l'une par rapport à l'autre.

### État de la technique.

Ces soufflets permettent de réaliser une continuité lorsqu'ils sont interposés entre les extrémités de deux tubulures coaxiales ; ils permettent également de réaliser une véritable étanchéité lorsqu'ils sont utilisés dans des vannes, comme des vannes à clapets, c'est-à-dire des vannes dans lesquelles le mouvement de l'organe obturateur est un simple mouvement de translation selon l'axe longitudinal du soufflet.

Ces dispositifs d'étanchéité en forme de soufflet permettent également, en même temps de transformer une pression en effort et inversement, ledit soufflet jouant un rôle de piston pour assurer la manoeuvre de l'obturateur dans le cas d'une vanne à clapet.

Le document US 2,893,431 (BOWDITCH) montre ce type de soufflet dans les diverses applications précitées et, en particulier, un soufflet qui est renforcé pour supporter des pressions internes très élevées, de l'ordre de plusieurs centaines de bars. Le soufflet comporte une armature qui permet de le renforcer extérieurement pour contenir les pressions qui s'exercent à l'intérieur ; cette armature est constituée de renforts en forme de bagues, ou d'anneaux, qui sont positionnés dans chaque creux ouvert sur l'extérieur, entre deux plis du soufflet.

Ces soufflets renforcés existent depuis très longtemps ; ils sont notamment décrits dans EP1156257 ou dans le document FR 451.327 (BADGER). Ce document montre des soufflets qui sont consolidés au moyen de plusieurs sortes de renforts annulaires : - des renforts internes disposés à l'intérieur du soufflet, dans les creux, pour tenir des pressions qui s'exercent à l'extérieur du soufflet, ou - des renforts externes disposés à l'extérieur du soufflet, pour tenir des pressions qui s'exercent à l'intérieur du soufflet. Les rebords adjacents de ces renforts, qui sont en saillie soit à l'intérieur, soit à l'extérieur de la périphérie du soufflet, sont susceptibles de buter les uns contre les autres, à l'intérieur, ou à l'extérieur du soufflet, selon le cas, lorsque le soufflet est contracté au degré maximum, de façon à empêcher d'atteindre un degré de contraction préjudiciable au soufflet.

Le document EP 0.083.889 (TUYAUX FLEXIBLES RUDOLPH) présente un perfectionnement qui concerne la conception des renforts internes annulaires disposés à l'intérieur du soufflet pour permettre leur montage et ce document montre également un soufflet qui est muni à la fois de renforts internes et externes pour améliorer leur rigidité. Ces renforts sont constitués d'anneaux qui comprennent une partie en forme un bourrelet se logeant chacun dans le creux d'une membrane cylindrique plissée, entre deux plis, et une partie en saillie par rapport à ladite membrane, faisant office de talon.

Ces renforts, internes et/ou externes, souffrent d'une certaine instabilité sous l'effet de la pression. Un des modes de ruine du soufflet est dû à l'instabilité mécanique qui découle du flambage du renfort. Cette instabilité par flambage peut être localisée au niveau d'un flanc d'onde, c'est-à-dire une portion du pli entre deux creux ; elle peut être locale au niveau d'une onde ou d'un groupe d'ondes et elle peut être globale avec, dans ce cas, un flambage général de la structure.

Cette instabilité par flambage se traduit par une rotation des sections droites des renforts, par un vrillage des ondes et par un déplacement transversal du soufflet.

La présente invention a pour objectif de supprimer cette instabilité des soufflets, à tout le moins de la réduire considérablement, pour pouvoir faire face à des pressions très importantes, aussi bien des pressions qui s'exercent sur la surface externe du soufflet que des pressions qui s'exercent sur sa surface interne, tout en conservant une capacité de déformation suffisante pour les différentes applications mentionnées précédemment.

### Divulgation de l'invention.

Le soufflet selon l'invention se présente sous la forme d'une membrane cylindrique plissée avec des creux entre deux plis et ces creux internes et externes contiennent des renforts qui forment une armature, lesquels renforts sont constitués d'anneaux qui comprennent une partie en forme de bourrelet se logeant chacun dans un creux de ladite membrane, entre deux plis, et une partie en saillie par rapport à ladite membrane, faisant office de talon, lequel talon a une largeur dont la dimension est choisie pour maintenir entre les renforts adjacents internes et les renforts adjacents externes, un espace faisant office de logement pour ladite membrane, et la largeur de cet espace, en tout point dudit logement, est supérieure à l'épaisseur de ladite membrane, lorsque que le soufflet est totalement comprimé. Ainsi, la membrane n'est pas écrasée dans son logement lorsque ledit soufflet est comprimé, ou contracté, au degré maximum.

Toujours selon l'invention, les renforts internes comportent des talons dont la largeur est telle que, lorsque que le soufflet est en position comprimée, lesdits talons adjacents sont en contact les uns avec les autres, empêchant le phénomène de flambage et d'instabilité du soufflet lorsqu'il est en compression.

Selon une autre disposition de l'invention, les renforts externes comportent des talons dont la largeur est telle que, lorsque que le soufflet est totalement comprimé, lesdits talons adjacents sont en contact les uns avec les autres.

Selon encore une autre disposition de l'invention, les renforts externes comportent des talons qui sont aménagés pour former, au niveau des rebords de deux talons adjacents, une coulisse axiale qui permet de réaliser un guidage permanent desdits renforts externes les uns par rapport aux autres sur toute la course du soufflet, empêchant là aussi le phénomène de flambage et d'instabilité pendant l'extension du soufflet sous l'effet d'une pression interne dans ce dernier.

Toujours selon l'invention, la largeur des talons qui sont en forme de coulisse, pour les renforts externes, est choisie pour correspondre à la largeur des talons des renforts internes de façon à maîtriser, encore plus sûrement, le phénomène de flambage et d'instabilité pendant la compression et l'extension du soufflet.

Avantageusement, les renforts externes comportent, sur le rebord de leur talons, un aménagement mâle-femelle qui forme la coulisse : d'un côté, le talon comporte un alésage axial et, de l'autre côté, il comporte un épaulement qui s'emboîte dans ledit alésage.

Selon une autre disposition de l'invention, le soufflet renferme un manchon coopérant avec la surface périphérique interne de l'ensemble des renforts internes, et en particulier à la surface interne des bagues desdits renforts internes, pour leur servir de guide et prévenir un éventuel mode d'instabilité latéral.

Toujours selon l'invention, le soufflet comprend, en combinaison, des renforts externes dont les rebords des talons sont aménagés en forme de coulisse et un manchon cylindrique coopérant avec la surface interne des talons des renforts internes afin de prévenir un éventuel mode d'instabilité latéral et afin d'éradiquer le phénomène de flambage et d'instabilité pendant la compression et l'extension du soufflet.

Toujours selon l'invention, dans le cas d'une application du soufflet à un équipement du genre vanne à clapet, la somme des largeurs des talons en saillie des différents renforts, tant les talons internes que les talons externes, est choisie pour assurer une contraction totale du soufflet qui excède la course dudit clapet, de quelques 2 mm à 4 mm , afin de limiter au maximum, lorsque ledit clapet est ouvert, l'espace entre les renforts adjacents (à 0,75 mm par exemple), ce qui a pour effet de favoriser le soutien desdits renforts les uns par rapport aux autres, réduisant ainsi les risques de flambage.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente une partie d'une demi-coupe d'un dispositif d'étanchéité en forme de soufflet selon l'invention ;
- la figure 2 représente une portion du soufflet selon un autre mode de réalisation de l'invention ;
- la figure 3 représente également une portion du soufflet selon l'invention avec un guidage des renforts externes les uns par rapport aux autres ;
- la figure 4 représente un soufflet, selon la figure 3, qui renferme un manchon servant de guide pour les renforts internes ;
- la figure 5 représente, en coupe, une vanne à clapet dans laquelle est intégré un dispositif d'étanchéité en forme de soufflet qui est constitué de deux soufflets aboutés.

### Modes de réalisation de l'invention.

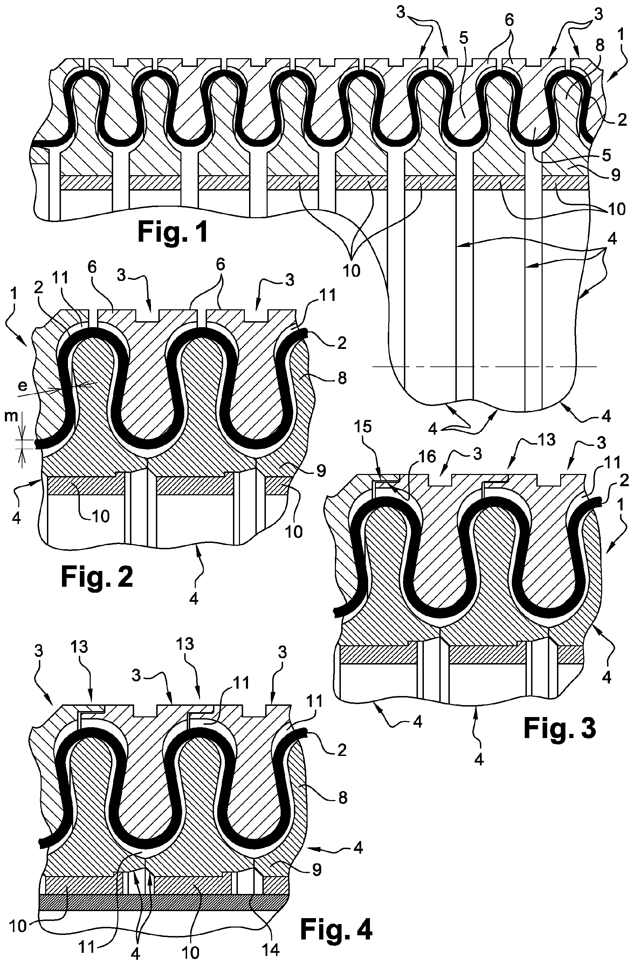

La figure 1 montre une portion d'un soufflet 1 qui est aménagé avec des renforts situés à l'intérieur et à l'extérieur de la membrane 2 qui constitue le soufflet proprement dit, comme décrit dans le document EP 0.083.889 (TUYAUX FLEXIBLES RUDOLPH) précité. Cette membrane 2 est généralement façonnée à partir d'un tube « feuilleté », constitué de plusieurs tubes à paroi mince qui sont emboîtés les uns dans les autres, comme représenté notamment dans le document FR 451.327 (BADGER) précité.

Après sa mise en forme, la membrane 2 du soufflet est en accordéon avec des plis qui délimitent des creux externes et internes dont la profondeur radiale est de l'ordre de deux fois leur largeur axiale, et, dans ces creux externes et internes, on trouve, respectivement, des renforts 3 externes et des renforts 4 internes.

Les renforts 3 externes se présentent sous la forme d'anneaux dont la section, comme représentée sur les figures 1 à 4, fait penser à une tétine. Les renforts 3 externes peuvent être monobloc et correspondre à une partie de l'outillage qui permet de façonner la membrane 2 par hydroformage ; ils sont inamovibles lorsque les plis sont formés. Chaque anneau des renforts 3 comporte un bourrelet 5 qui se loge dans le creux externe du soufflet 1 et il comporte un talon 6 qui est en saillie à la périphérie externe dudit soufflet 1.

Dans le mode de réalisation de la figure 1, les talons 6 des renforts 3 externes ont une largeur qui permet de limiter la contraction du soufflet 1 ; ils forment un système de butée et leur largeur, qui est maximale, leur confère une grande inertie, ce qui a comme avantage de limiter les risques de flambage des renforts et d'éviter la ruine du soufflet.

Les renforts 4 internes sont façonnés, comme détaillés notamment dans les documents FR 451.327 (BADGER) et EP 0.083.889 (TUYAUX FLEXIBLES RUDOLPH) précités, à partir de segments qui s'insèrent dans chaque creux interne de la membrane 2 pour donner, là aussi, un anneau dont la section, comme représentée figure 1, s'apparente à une tétine. Chaque renfort 4 interne comprend un bourrelet 8 qui s'étend dans le creux interne de la membrane 2 et un talon 9 en saillie, à l'intérieur du soufflet 1.

Chaque anneau est consolidé au moyen d'une bague 10 qui s'étend sur la surface interne du talon 9, en saillie également dans le soufflet 1. Cette bague 10 est soudée in situ aux différents segments qui constituent l'anneau. Les renforts 4 internes sont donc constitués de plusieurs segments qui forment un anneau et d'une bague 10 qui assemble et rigidifie lesdits segments.

La largeur du talon 9 et son association avec la bague 10 confèrent au renfort 4 interne une très grande inertie, favorable à la lutte contre le flambage des renforts 4 internes et au maintien de l'intégrité du soufflet.

Dans le mode de réalisation représenté figure 1, les talons 9 des renforts 4 internes ont une largeur qui est légèrement inférieure à celle des talons 6 des renforts 3 externes. La contraction maximale du soufflet 1 est donc limitée par les talons 6.

La membrane 2 se loge dans un espace dont le contour est délimité par les renforts externes 3 et internes 4. La figure 2 montre, d'une façon plus détaillée, le contour de cet espace qui constitue le logement 11 dans lequel évolue la membrane 2. Ce logement 11 a une largeur e qui est sensiblement supérieure à l'épaisseur m de la membrane 2, de l'ordre de 0,6 mm, comprise par exemple entre 0,4 mm et 0,8 mm.

Dans ce mode de réalisation, figure 2, les talons 6 des renforts 3 externes ont une largeur qui est inférieure à celle des talons 9 des renforts 4 internes. Ce sont les renforts 4 internes qui règlent la dimension du logement 11 de la membrane 2 ; ils limitent le débattement du soufflet 1 en contraction pour réduire les risques d'instabilité et de flambage en compression.

Les figures 3 et 4 montrent un soufflet 1 qui est guidé axialement au cours de son mouvement pour éviter un phénomène de déplacement radial, ou transversal. Ce guidage est réalisé au moyen d'un système de coulisse 13 aménagé sur les renforts externes 3 et il est réalisé au moyen d'un manchon 14 pour les renforts internes 4.

Les renforts 3 externes comportent, sur le rebord de leur talons 6, un aménagement mâle-femelle qui forme la coulisse 13 : d'un côté, le talon 6 comporte un alésage 15 axial et, de l'autre côté, il comporte un épaulement 16 qui s'emboîte dans ledit alésage 15.

Cette combinaison des renforts externes 3 et internes 4 confère à l'ensemble du soufflet 1 une stabilité à la fois en extension et en compression.

La figure 4 montre le manchon 14 qui sert de guide pour les renforts 4 internes. Ce manchon 14 se présente sous la forme d'un tube dont le diamètre externe est sensiblement inférieur au diamètre interne des bagues 10 des renforts 4 internes pour permettre un glissement de ces dernières sur la surface dudit manchon 14.

Ce manchon 14, associé aux renforts 4 internes, peut être combiné avec les aménagements des renforts 3 externes en forme de coulisse de façon à prévenir, en plus, un éventuel mode d'instabilité latéral.

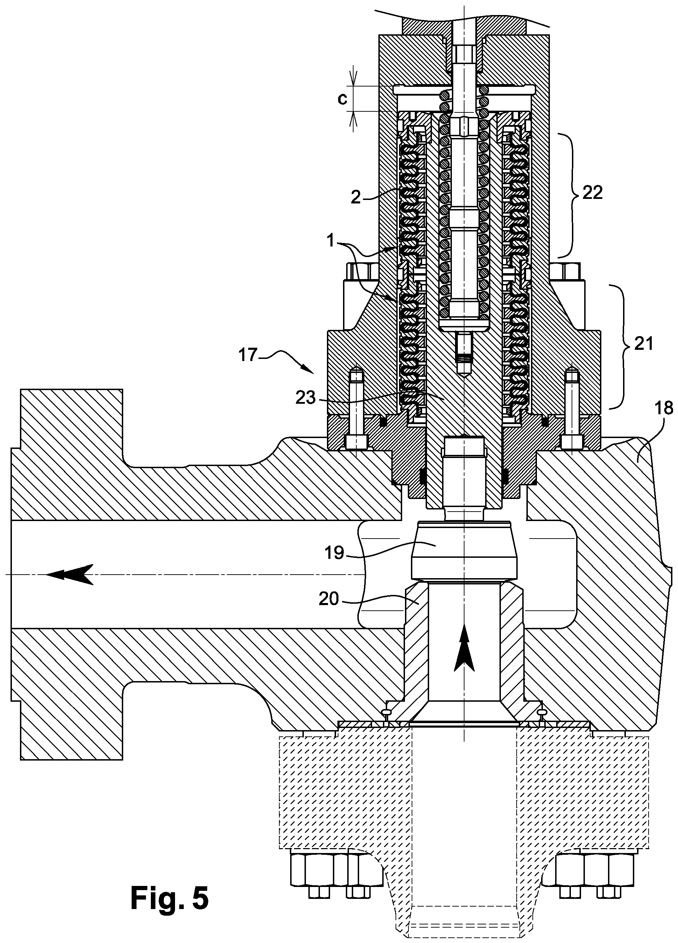

La figure 5 représente une vanne 17 qui comporte un corps 18 à travers lequel circule un fluide sous pression. Le clapet 19 coopère avec un siège 20 et ce clapet 19 est isolé de ses moyens de commande par un dispositif d'étanchéité comprenant au moins un soufflet 1 métallique du type de ceux qui ont été détaillés auparavant, figures 1 à 4.

Dans le mode de réalisation détaillé sur cette figure 5, le dispositif d'étanchéité comprend une paire de soufflets disposés en série pour obtenir une course appropriée, suffisante pour concilier la manoeuvre du clapet 19 et une bonne tenue du soufflet face aux pressions internes à la vanne et externes au soufflet 1. Un soufflet 1, 21, proche du clapet 19, est relié de façon étanche au corps 18 de la vanne et le second soufflet 1, 22, est solidaire, de façon étanche, de l'extrémité de la tige 23 qui sert de tige de manoeuvre du clapet 19, en même temps que d'organe de guidage.

Les deux soufflets 21 et 22 sont assemblés de façon appropriés, bout à bout, dans le prolongement l'un de l'autre.

Dans le cas d'une vanne 17 du type à clapets 19, la capacité d'allongement du ou des soufflets 1 est nécessairement supérieure à la course maximale dudit clapet 19 entre sa position fermée et sa position ouverte ; cette capacité d'allongement supplémentaire, en plus de la course C dudit clapet 19, est de l'ordre de 3 mm, compris par exemple entre 2 mm et 4 mm.

Chaque membrane 2, dans le mode de réalisation de la figure 5, comporte huit plis délimitant huit creux internes pour loger huit renforts 4 internes et comporte sept creux externes pour loger sept renforts 3 externes. La capacité d'allongement du soufflet 1 correspond à l'addition des écarts entre les talons 6 des renforts 3 externes ou celle des écarts des talons 9 des renforts 4 internes selon le cas. Chaque écart est relativement faible et, de ce fait, les renforts se maintiennent les uns les autres réduisant de façon importante les risques de flambage et de déformation sous l'effet de la pression qui peut s'exercer sur le soufflet 1 aussi bien à l'intérieur dudit soufflet qu'à l'extérieur.

## Revendications

1. Dispositif d'étanchéité en forme de soufflet (1) façonné à partir d'une membrane (2) cylindrique plissée avec des creux entre deux plis, lesquels creux externes et internes contiennent des renforts qui forment une armature, lesquels renforts (3, 4) sont constitués d'anneaux qui comprennent une partie en forme de bourrelet (5, 8) se logeant chacun dans le creux de ladite membrane (2), entre deux plis, et une partie en saillie par rapport à ladite membrane, faisant office de talon (6, 9),
**caractérisé en ce que** le talon (6, 9) a une largeur dont la dimension est choisie pour maintenir entre les renforts (3) adjacents externes et les renforts (4) adjacents internes, un espace faisant office de logement (11) pour ladite membrane (2), et la largeur (e) de cet espace, en tout point dudit logement (11), est supérieure à l'épaisseur (m) de ladite membrane (2), lorsque que le soufflet (1) est totalement comprimé.

2. Dispositif d'étanchéité en forme de soufflet (1) selon la revendication 1,
**caractérisé en ce que** les renforts internes (4) comportent des talons (9) dont la largeur est telle que, lorsque que le soufflet (1) est totalement comprimé, lesdits talons (9) adjacents sont en contact les uns avec les autres.

3. Dispositif d'étanchéité en forme de soufflet (1) selon la revendication 1,
**caractérisé en ce que** les renforts externes (3) comportent des talons (6) dont la largeur est telle que, lorsque que le soufflet (1) est totalement comprimé, lesdits talons (6) adjacents sont en contact les uns avec les autres.

4. Dispositif d'étanchéité en forme de soufflet (1) selon la revendication 1,
**caractérisé en ce que** les renforts externes (3) comportent des talons (6) qui sont aménagés pour former, au niveau des rebords de deux talons (6) adjacents, une coulisse (13) axiale qui permet de réaliser un guidage permanent desdits renforts (3) les uns par rapport aux autres sur toute la course du soufflet (1).

5. Dispositif d'étanchéité en forme de soufflet (1) selon la revendication 1,
**caractérisé en ce que** la largeur des talons (6) qui sont en forme de coulisse (13), pour les renforts (3) externes, est choisie pour correspondre à la largeur des talons (9) des renforts (4) internes.

6. Dispositif d'étanchéité en forme de soufflet (1) selon la revendication 4 ou 5, **caractérisé en ce que** les renforts (3) externes comportent, sur le rebord de leur talons (6), un aménagement mâle-femelle qui forme la coulisse (13) : d'un côté, le talon (6) comporte un alésage (15) axial et, de l'autre côté, il comporte un épaulement (16) qui s'emboîte dans ledit alésage (15).

7. Dispositif d'étanchéité en forme de soufflet (1) selon la revendication 1,
**caractérisé en ce que** ledit soufflet (1) renferme un manchon (14) coopérant avec la surface périphérique interne de l'ensemble des renforts (4) internes, et en particulier à la surface interne des bagues (10) desdits renforts internes (4), servant de guide pour lesdits renforts (4) internes.

8. Dispositif d'étanchéité en forme de soufflet (1) selon la revendication 1,
**caractérisé en ce que** ledit soufflet (1) comprend, en combinaison, des renforts externes (3) dont les rebords des talons (6) sont aménagés en forme de coulisse (13) et un manchon cylindrique (14) coopérant avec la surface interne des renforts internes (4).

9. Dispositif d'étanchéité en forme de soufflet (1) selon la revendication 1,
**caractérisé en ce que**, dans le cas d'une application dudit soufflet (1) à un équipement du genre vanne (17) à clapet (19), la somme des largeurs des talons (6, 9) en saillie des différents renforts (3, 4), tant celle des talons externes (6) que celle des talons internes (9), est choisie pour assurer une contraction totale du soufflet (1) qui excède la course du clapet (19) de 2 mm à 4 mm afin de limiter au maximum, lorsque ledit clapet (19) est ouvert, l'espace entre les renforts (3,4) adjacents, ce qui a pour effet de favoriser le soutien desdits renforts (3, 4) les uns par rapport aux autres, réduisant ainsi les risques de flambage.

## Patentansprüche

1. Dichtungsvorrichtung in Form eines Faltenbalges (1), der aus einer zylindrischen Membran (2) hergestellt ist, die mit Vertiefungen zwischen zwei Falten gefaltet ist, wobei die äußeren und inneren Vertiefungen Verstärkungen enthalten, welche eine Bewehrung bilden, wobei die Verstärkungen (3, 4) aus Ringen bestehen, welche einen wulstförmigen Teil (5, 8), der jeweils in die Vertiefung der Membran (2) zwischen zwei Falten eingreift, und einen in Bezug auf die Membran vorstehenden Teil, der als Steg (6, 9) dient, umfassen,
**dadurch gekennzeichnet, dass** der Steg (6, 9) eine Breite aufweist, deren Größe so gewählt ist, dass zwischen den äußeren benachbarten Verstärkungen (3) und den inneren benachbarten Verstärkungen (4) ein Raum erhalten bleibt, der als Aufnahme (11) für die Membran (2) dient, und die Breite (e) dieses Raumes in jedem Punkt der Aufnahme (11) größer als die Dicke (m) der Membran (2) ist, wenn der Faltenbalg (1) vollständig zusammengedrückt ist.

2. Dichtungsvorrichtung in Form eines Faltenbalges (1) nach Anspruch 1, **dadurch gekennzeichnet, dass** die inneren Verstärkungen (4) Stege (9) aufweisen, deren Breite so bemessen ist, dass, wenn der Faltenbalg (1) vollständig zusammengedrückt ist, sich die benachbarten Stege (9) in Kontakt miteinander befinden.

3. Dichtungsvorrichtung in Form eines Faltenbalges (1) nach Anspruch 1, **dadurch gekennzeichnet, dass** die äußeren Verstärkungen (3) Stege (6) aufweisen, deren Breite so bemessen ist, dass, wenn der Faltenbalg (1) vollständig zusammengedrückt ist, sich die benachbarten Stege (6) in Kontakt miteinander befinden.

4. Dichtungsvorrichtung in Form eines Faltenbalges (1) nach Anspruch 1, **dadurch gekennzeichnet, dass** die äußeren Verstärkungen (3) Stege (6) aufweisen, welche dafür eingerichtet sind, an den Rändern von zwei benachbarten Stegen (6) eine axiale Gleitführung (13) zu bilden, welche es ermöglicht, eine ständige Führung der Verstärkungen (3) relativ zueinander auf dem gesamten Weg des Faltenbalges (1) zu realisieren.

5. Dichtungsvorrichtung in Form eines Faltenbalges (1) nach Anspruch 1, **dadurch gekennzeichnet, dass** die Breite der Stege (6), welche die Form einer Gleitführung (13) für die äußeren Verstärkungen (3) haben, so gewählt ist, dass sie der Breite der Stege (9) der inneren Verstärkungen (4) entspricht.

6. Dichtungsvorrichtung in Form eines Faltenbalges (1) nach Anspruch 4 oder 5, **dadurch gekennzeichnet, dass** die äußeren Verstärkungen (3) am Rand ihrer Stege (6) eine Steckverbindungsanordnung aufweisen, welche die Gleitführung (13) bildet: Auf der einen Seite weist der Steg (6) eine axiale Ausnehmung (15) auf, und auf der anderen Seite weist er einen Ansatz (16) auf, der in die Ausnehmung (15) einrastet.

7. Dichtungsvorrichtung in Form eines Faltenbalges (1) nach Anspruch 1, **dadurch gekennzeichnet, dass** der Faltenbalg (1) eine Manschette (14) umschließt, die mit der inneren Umfangsfläche der Gesamtheit von inneren Verstärkungen (4) zusammenwirkt, und insbesondere mit der Innenfläche der Ringe (10) der inneren Verstärkungen (4), die als Führung für die inneren Verstärkungen (4) dienen.

8. Dichtungsvorrichtung in Form eines Faltenbalges (1) nach Anspruch 1, **dadurch gekennzeichnet, dass** der Faltenbalg (1), in einer Kombination, äußere Verstärkungen (3), deren Ränder der Stege (6) in Form einer Gleitführung (13) angeordnet sind, und eine zylindrische Manschette (14), die mit der Innenfläche der inneren Verstärkungen (4) zusammenwirkt, umfasst.

9. Dichtungsvorrichtung in Form eines Faltenbalges (1) nach Anspruch 1, **dadurch gekennzeichnet, dass** im Falle einer Anwendung des Faltenbalges (1) bei einer Einrichtung von der Art eines Ventils (17) mit Klappe (19) die Summe der Breiten der Stege (6, 9), die über die verschiedenen Verstärkungen (3, 4) hinausragen, sowohl diejenige der äußeren Stege (6) als auch diejenige der inneren Stege (9), so gewählt ist, dass eine Gesamtkontraktion des Faltenbalges (1) sichergestellt ist, welche den Weg der Klappe (19) um 2 mm bis 4 mm übersteigt, um, wenn die Klappe (19) geöffnet ist, den Raum zwischen den benachbarten Verstärkungen (3, 4) maximal zu begrenzen, was bewirkt, dass die gegenseitige Abstützung der Verstärkungen (3, 4) gefördert wird, wodurch die Gefahr des Knickens verringert wird.

## Claims

1. Sealing device in the form of a bellows (1) shaped from a cylindrical membrane (2) pleated with hollows between two pleats, which external and internal hollows contain reinforcers which form a reinforcement, which reinforcers (3, 4) are made up of rings which comprise a bead-shaped part (5, 8) housed in each of the hollows of the said membrane (2), between two pleats, and a part that projects with respect to the said membrane, acting as a heel (6, 9),
**characterized in that** the heel (6, 9) has a width the dimension of which is chosen in order to maintain between the external adjacent reinforcers (3) and the internal adjacent reinforcers (4), a space which acts as a housing (11) for the said membrane (2), the width (e) of this space, at any point on the said housing (11) being greater than the thickness (m) of the said membrane (2) when the bellows (1) is fully compressed.

2. Sealing device in the form of a bellows (1) according to Claim 1, **characterized in that** the internal reinforcers (4) comprise heels (9) of which the width is such that, when the bellows (1) is fully compressed, the said adjacent heels (9) are in contact with one another.

3. Sealing device in the form of a bellows (1) according to Claim 1, **characterized in that** the external reinforcers (3) comprise heels (6) of which the width is such that, when the bellows (1) is fully compressed, the said adjacent heels (6) are in contact with one another.

4. Sealing device in the form of a bellows (1) according to Claim 1, **characterized in that** the external reinforcers (3) comprise heels (6) which are configured in such a way as to form, at the edges of two adjacent heels (6), an axial guideway (13) providing permanent guidance of the said reinforcers (3) relative to one another over the entire travel of the bellows (1).

5. Sealing device in the form of a bellows (1) according to Claim 1, **characterized in that** the width of the heels (6), which are shaped as guideways (13), for the external reinforcers (3), is chosen to correspond to the width of the heels (9) of the internal reinforcers (4).

6. Sealing device in the form of a bellows (1) according to Claim 4 or 5, **characterized in that** the external reinforcers (3) comprise, on the edge of their heels (6), a male-female configuration which forms the guideway (13): on the one side, the heel (6) comprises an axial bore (15), and on the other side it comprises a shoulder (16) which fits into the said bore (15).

7. Sealing device in the form of a bellows (1) according to Claim 1, **characterized in that** the said bellows (1) contains a sleeve (14) collaborating with the internal peripheral surface of the collection of internal reinforcers (4), and in particular at the internal surface of the rings (10) of the said internal reinforcers (4), acting as a guide for the said internal reinforcers (4).

8. Sealing device in the form of a bellows (1) according to Claim 1, **characterized in that** the said bellows (1) comprises, in combination, external reinforcers (3) of which the edges of the heels (6) are configured in the form of guideways (13) and a cylindrical sleeve (14) collaborating with the internal surface of the internal reinforcers (4).

9. Sealing device in the form of a bellows (1) according to Claim 1, **characterized in that**, in instances in which the said bellows (1) is applied to equipment of the mushroom (19) valve (17) type, the sum of the widths of the heels (6, 9) projecting from the various reinforcers (3, 4), both that of the external heels (6) and that of the internal heels (9), is chosen in such a way as to ensure a total contraction of the bellows (1) that exceeds the stroke of the mushroom (19) by 2 mm to 4 mm in order to minimize, when the said mushroom (19) is in the valve-open position, the space between the adjacent reinforcers (3, 4), this having the effect of encouraging the said reinforcers (3, 4) to support one another, thus reducing the risks of buckling.
